# EUROPEAN PATENT SPECIFICATION

(11) **EP 0 968 980 B1**
(45) Date of publication and mention of the grant of the patent: **26.05.2010**
(21) Application number: 99112549.3
(22) Date of filing: 01.07.1999
(51) Int. Cl.: C05C 9/02, C05B 15/00, C05F 1/00, C05G 3/08, C05G 3/02, C05F 11/00, C05F 11/08

(54) **Microgranular fertiliser composition for local applicaton during sowing or transplanting**
Mikrogranuläre Düngemittelzusammensetzung zur örtlichen Anwendung während des Säens oder des Verpflanzens
Composition microgranulaire d'engrais pour applicaton locale pendant l'ensemencement ou la transplantation

(30) Priority: 02.07.1998 IT MI981521
(43) Date of publication of application: 05.01.2000
(60) Divisional application: 03004730.2
(73) Proprietor: Agroqualità S.r.l., 20016 Pero (MI) (IT)
(72) Inventor: Miele, Sergio, 56123 Pisa (IT); Bargiacchi, Enrica, 56124 Pisa (IT)
(74) Representative: Gislon, Gabriele

(56) References cited:
- EP-A- 0 010 638
- EP-A- 0 839 780
- FR-A- 2 493 305
- FR-A- 2 729 825
- US-A- 4 571 256
- US-A- 4 832 728
- US-A- 5 021 247
- US-A- 5 118 337
- US-A- 5 240 490
- US-A- 5 466 273
- DATABASE WPI Section Ch, Week 9503 Derwent Publications Ltd., London, GB; Class C04, AN 95-019107 XP002095228 & JP 06 305870 A (ISHIDA T), 1 November 1994 (1994-11-01)
- DATABASE WPI Section Ch, Week 9727 Derwent Publications Ltd., London, GB; Class C04, AN 97-294755 XP002095229 & JP 09 110564 A (URABE SANGYO KK), 28 April 1997 (1997-04-28)
- DATABASE WPI Section Ch, Week 9425 Derwent Publications Ltd., London, GB; Class C04, AN 94-206268 XP002095230 & JP 06 144974 A (SHOWA HIRYO KK), 24 May 1994 (1994-05-24)
- DATABASE WPI Section Ch, Week 198403 Derwent Publications Ltd., London, GB; Class C03, AN 1984-014899 XP002147120 & JP 58 208191 A (KYORITSU YUKI KOGYO KENKYUSHO), 3 December 1983 (1983-12-03)
- W. Dobrat, A Martin (editors): "CIPAC Handbook," 1995, vol. F, , pages 420-425
- SERGIO MIELE: "La conzimazione localizzata: aspetti agronomici e tecnico applicativi" M&MA, - 1 December 1984 (1984-12-01)
- G.C.Lowrison: "Fertilizer technology" , pages 508-511

## Description

For some time now it has been a widespread practice to distribute fertilizers during sowing or transplanting of various agricultural crops in order to provide young plants with nutritional substances during a delicate and important stage of their growth. This distribution may be performed either along the sowing or transplanting row or in more or less wide bands along these rows and may be carried out using both conventional granular fertilizers and liquid or fluid fertilizers.

Local manuring during sowing and transplanting has numerous advantages such as a better absorption of the nutritional substances present in sowing or transplanting beds which are essentially moist and at relatively low temperatures: the possibility of distributing smaller total quantities of fertilizers, because applied locally, therefore resulting in lower costs and a reduced risk of environmental pollution; the improved growth of the root system of the plants owing to specific and localized manuring; the reduced competition of weeds which, during sowing or transplanting, generally are not yet fully developed also because they are often controlled using suitable weed-killers.

Localized manuring during sowing or transplanting has, however, a few drawbacks of a technical nature which cannot be easily solved and which may be summarised as follows:
a) Slowing down of the sowing or transplanting operations due to the need to replenish the corresponding equipment with fertilizer which is applied in relatively large doses (100-150 kg/ha), said slowing down generally not being acceptable for agricultural concerns or contractors who must take advantage of well-defined periods during a season which is often subject to risk on account of the seasonal trends and rainfall;
b) Increased weight of the sowing or transplanting machines due to the additional weight of the said quantity of fertilizers. This increase in weight causes overloading of the sowing machines and the transplanting equipment, with serious drawbacks for the sowing or transplanting beds, in particular at the end of winter or on clayey ground and slopes, when it becomes difficult - if not impossible - to apply locally the fertilizers at the right depth and in the optimum quantities, with various irregular doses which adversely affect the simultaneous and uniform growth of the plant crops;
c) In the case where liquid or fluid fertilizers are used, the problem of correct dosing of small quantities thereof, which is sometimes accompanied by blockages of the nozzles, in particular when operating at low temperatures, with a consequent increase in the viscosity of the products;
d) The difficulty also, for certain crops, of locally applying some types of nitrogenous fertilizers (for example those with a high ammonia nitrogen content) which could result in the risk of plant poisoning;
e) Finally, the possibility that the deficiency of certain micro-elements (such as zinc) may become more pronounced due to antagonism (for example if phosphorus alone is applied locally).

It has now been unexpectedly discovered that it is possible to prepare a fertilizer composition for use during sowing or transplanting, which possesses numerous applicational advantages and which limits considerably the impact of the abovementioned drawbacks.

US 5021247 discloses a Nitrogen based fertilizer obtained by heating natural Nitrogen containing materials under alkaline conditions. The treated material is brought to pH neutral by addition of phosphoric acid; screen analysis of the final granulated product shows two groups having dimensions of granules between 4,0 and 2,0 mm and between 2,0 mm and 0,7 mm, respectively

US 5240490 discloses a process for preparing a fertiliter similar to the above mentioned one; in US 5240490 sulphuric acid is used instead of phosphoric acid. 44% of the final product has a granule size of between 1,19 mm and 0,42 mm US 5466723 discloses a Nitrogen based fertilizer comprising a very low amount of rock phosphate. In their wet condition the obtained granules are rolled to 1mm diameter.

It has been noted in fact that, in the case of the most widely used granular fertilizer compositions, suitable for local application, in the past exclusively granules with a diameter greater than 2.0 mm were used and it has been surprisingly found that brilliant results may be obtained by preparing new fertilizer formulations in the form of granules with much smaller dimensions, ranging between 0.1 and 1.5 mm, based on the synergic association of a selected organic fraction with an inorganic fraction.

A particularly suitable organic fraction consists of an organic nitrogenous component able to supply organic nitrogen in a form which can be readily assimilated by the crops. More specifically two highly effective organic nitrogenous components, which can be used individually or in combination, have been defined and selected, the first being an organic nitrogenous substance of natural origin and the second being a slow-release organic nitrogenous substance produced by synthesis.

Advantageously, in the composition according to the invention, the two organic nitrogenous components are present in predefined ratios, for example 50:50, 25:75 and 75:25.

It has also been determined that granules with an average diameter between 0.5 and 1 mm, are particularly suitable for local application during sowing or transplanting.

In accordance with an aspect of the present invention, a fertilizer composition in the form of granules for local application during sowing or transplanting of agricultural crops, in which said granules have an average particle size of between 0.1 and 1.5 mm, is provided, said composition comprising an organic nitrogenous substance of natural origin, a slow-release organic nitrogenous substance produced by synthesis and a phosphate or phospho-nitrogen compound.

In accordance with another aspect of the present invention a fertilizer composition in the form of granules, for local application during sowing or transplanting of agricultural crops, in which said granules have an average particle size of between 0.1 and 1.5 mm, is provided, said composition comprising an association of an organic nitrogenous component with a humic acid derivative and a phosphate or phospho-nitrogen compound.

Organic nitrogenous substances of natural origin which are particularly suitable are chosen from the group comprising dried blood, meat meal, hydrolyzed animal epithelium, crustacean chitin, chrysalis meal, horn and hoof meal and wildfowl feathers and mixtures thereof, among these degreased and dried animal blood being preferred.

Animal blood, degreased and dried, is advantageously produced using the technique of spray drying performed at high temperatures and pressures, but for short durations and with large volumes of air, so as to obtain a product with a nitrogen content higher than 13%, a moisture content of less than 7% and a water solubility greater than 85%.

Within the scope of the present invention, the term "spray drying" is understood as meaning a technique, the main characteristic feature of which is the surface area per unit of weight generated by atomization of the liquid matrix used. For example, atomizing the droplets to a fineness of 100 µ produces an exchange surface area of more than 27,000 m²/kg. When, on the other hand, the liquid matrix is atomized to a fineness of 20 µ, the exchange surface area increases to 130,000 m²/kg. The size of the dried particles may be controlled by the liquid atomization method and by the type of chamber into which the hot droplets are injected. By proceeding in a suitable manner, it is possible to obtain particles with a particle size and vapour surrounding the individual droplets such that the saturation temperature is not exceeded. Until the particle becomes completely dry, the evaporation continues and the temperature of the solid matter does not approach the exit temperature of the drier. In this way, heat-sensitive products may be easily dried, without damage, in short periods of time (3-5 seconds).

Advantageously the slow-release organic nitrogenous substance produced by synthesis is a compound based on urea condensed with aldehyde, preferably an aldehyde with 1 to 6 C atoms. In accordance with a preferred embodiment, said aldehyde is formaldehyde.

The phosphate and phospho-nitrogen compounds of inorganic origin for use in microgranular fertilizers according to the invention may all be compounds containing more or less soluble phosphoric anhydride, such as for example ammonium or potassium phosphates, ammonium polyphosphates, urea/phosphoric acid adducts, superphosphates, ground or partially soluble natural phosphorites, calcium and aluminium phosphate, thermal phosphates or dephosphorylation waste. The phospho-nitrogen compounds of natural origin may be bone meal.

The nitrogenous or phosphate or phospho-nitrogen compounds indicated above are mixed together in suitable proportions so that the total nitrogen is in the range from 1% to 35% by weight and the phosphoric anhydride is in the range from 50 to 5% by weight with respect to the total weight of the composition.

The composition according to the invention may further include one or more potassium salts, including chloride, sulphate, or potassium phosphate salts and also potassium sulphates with magnesium salts and unrefined, optionally enriched potassium salts.

Advantageously, the composition of the invention comprises further compounds such as oxides, carbonates, sulphates and nitrates of calcium, calcium and magnesium, magnesium or sulphur in various forms of crystallization.

Further micro-elements optionally contained are zinc, manganese, iron, copper, cobalt and molybdenum oxides, salts, chelates and various organic complexes. Said micro-elements, except for zinc, may be present in the microgranular formulations in the most varied concentration ratios. In the case of zinc, in particular, the useful concentration ranges are those corresponding to Zn levels of < 12 > 0 and < 70 > 12.

In accordance with a preferred embodiment, the composition includes one or more plant protection agents such as: insecticides or systemic nematocides (for example chloronicotinyl compounds, such as nitepyram, thiacloprid, TI-435, etc.; carbamates and pro-carbamates, such as: carbofuran, benfuracarb, carbosulfan, furathiocarb; carbamoyloximes, such as aldicarb or oxamyl; phosphoric esters, such as disulfoton, phorate, terbufos, etc.); insectides or contact nematocides (for example various phosphoric esters, such as parathion, diazinon, chlorpyrifos, tebupyrimfos; ethoprofos, phenamifos, cadusafos, fosthiazate, etc.; pyrethroids which are stable in the ground, such as for example tefluthrin; organic chlorinated compounds, such as lindane; pyrazolic compounds, such as fipronil, etc.); systemic fungicides (for example, oxatiines such as carboxin; benzimidazoles or thiophenates; various carboxamides; phenylamides, such as for example: metalaxyl, benalaxyl, etc.; various triazoles and imidazoles; phenylpyrroles such as cyprodinil, etc.; aluminium phosetyl, propamocarb, cimoxanyl); contact fungicides (for example dithiocarbamates, such as maneb or mancozeb, phthalimides, such as for example captane, hymexazole, etridazole, etc.) or selective herbicides for suitable crops which may be used during pre-sowing or pre-transplanting with incorporation in the ground.

Any substances with a biological action may be incorporated in the microgranular fertilizer composition according to the invention, such as, for example, urease inhibitors, nitrification retardants, or various organisms, including rhizobia or azospirilla or thiobacteria.

In order to complete and aggregate the microgranular fertilizers according to the invention, inert substances or various adjuvants may be added, such as inorganic substances (for example various silicas and silicates, various sulphates and carbonates), various synthetic or organic substances (for example, leonardite, soluble humates and humic acid extracts, cellulose derivatives, lignin or various carbohydrates and polymers of vegetable or synthetic origin).

In particular, the presence of a derivative of humic acid, such as soluble humates and humic acid extracts and/or derivatives of lignin and various polymers of vegetable or synthetic origin, not only have an aggregating action during formulation, but also favour rapid and complete dissolving of the microgranule in the ground, owing to the increase in its wettability and surface activity. From this point of view, the adjuvants mentioned therefore constitute a component which helps improve significantly the physico-chemical characteristics and the agronomical efficiency of the microgranular fertilizers in question.

The microgranular fertilizers of the composition in question may be various mixtures of the active substances mentioned above, which are mixed in various ratios and preferably contain the following group of nutritional substances:
A: Nitrogen of natural origin or synthetic nitrogen, also with a slow releasing action;
B: Phosphoric anhydride of inorganic origin or natural organic origin;
C: Secondary elements (Ca, Mg, S) and micro-elements (Zn, Mn, Fe, Cu, Co, Mo);
D: All with the addition, if necessary, of potassium manures and/or plant protection agents or substances with a biological action and/or adjuvants or inert substances.

The following mixtures will therefore be possible:
A+B, A+B+C, A+B+D, A+B+C+D.

The compositions according to the present invention provide a specific physico-chemical reaction, in a single fertilizer, uniting in a single formulation different nutritional fractions which produce an agronomic efficiency and an immediate applicational method, owing to the effects which they are able to have on the root system of a young plant. The young plant, in fact, developing its root system in the presence of the composition mentioned above, produces a larger size absorbent capillitium which is able to intercept better and in a more complete manner, with respect to the normal operating conditions, the nutrients applied and those normally present in the ground. This results in a marked starter effect which expresses itself in the form of an increased rate of growth of the young plant which, in these conditions, will also have a greener coloured epigeal apparatus. All this is due to a synergic effect of the two fractions, i.e. the organic fraction and the inorganic fraction, which together, in the ratios provided and owing to the particular particle size of the fertilizer, achieve better results as regards the initial growth of the crops, the seeds or the plants of which have been treated with these innovative fertilizers, in the doses and using the applicational methods suggested, following specific experiments for this purpose conducted in a university environment. The crops so treated clearly benefit from said effect, performing better during the first stage of growth both in the case of sown crops and transplanted crops (starter effect).

In particular, the result is that the microgranular fertilizer compositions of the invention, incorporating in the formulation natural organic nitrogenous substances such as those mentioned, have, as a characterizing aspect of their formulation, proteins (organic nitrogenous component) of animal origin. These proteins and the polypeptides which form them are rich in groups able to form hydrogen bonds, so as to be able to produce structures of the fibrous or globular type. The former, typical of keratin and myosin, are insoluble in water, whereas the latter are soluble in aqueous solutions of acids, bases and salts. More particularly, the polypeptides which form the proteins of the blood, such as the myoglobin (formed by a single polypeptide) and the haemoglobin (consisting, in turn, of four polypeptides, each with 140 aminoacid residues) have a globular structure. The presence, in them, of zones which are rich in polar aminoacids (containing in the radical R -OH, -COOH, -NH₂ and other groups) and other zones distinguished by non-polar aminoacids (where the radical R has aliphatic or aromatic groups), with internal hydrogen bonds and the contact surfaces between the small molecules, is such that these globular polypeptides and their first degradation products have the characteristic of rapidly passing through the biological membranes and therefore of being readily absorbed by the plants and the capacity of complexing or chelating phosphorus and different ions, which are therefore absorbed more rapidly and completely than what occurs when only inorganic fractions are present or synthetic chelates are used.

The very presence of the haemin prosthetic group in the haemoglobin is an example of natural chelation of the iron which is bonded there to the pyrrolic system known as porphyrin.

These same characteristics may be altered if the industrial processes for preparation of the organic matrices in general, and in particular dry blood, tend to modify irreversibly their natural molecular structure. For example, again in the case of dry blood, the prior degreasing and the spray drying technique may reduce to a minimum the alteration of the natural characteristics of capacity for bio-assimilation and complexing of the metals and non-metals.

The microgranular fertilizing compositions of the invention may be applied during sowing or during transplanting of various crops, usually by using special equipment combined with the sowing machines or the transplanting machines, so as to be able to perform, in a single pass, both sowing or transplanting and local application of the microgranules, or local application of the microgranules may be performed manually, in particular for some transplanted crops.

This local application will be performed along the sowing row together with the seed or slightly below or to one side thereof or along the transplanting row and also below the plants or to one side thereof.

In accordance with a further aspect of the present invention, the use of a composition of the type described above, as a fertilizer for plant and tree crops, including vines, is envisaged. The crops concerned are all plant crops, in particular industrial crops (for example sugar beet, tobacco, sugar cane, cotton, etc.), cereals (for example wheat, barley, maize, millet, rice, etc.), leguminous forage and seed plants (for example bean, runner bean, lucerne, clover, etc.), oil-producing crops (for example soya, rape, sunflower, peanuts, etc.) as well as market gardening plants, ornamental plants and various grass lawns. Vines and tree crops (stone-fruit, pomaceous and all other wood and fruit varieties) are involved during planting of the young plants.

The application doses may vary between a minimum of 10 kg/ha up to a maximum of 100 kg/ha of localized microgranular fertilizers, depending on the type of crop, the planting arrangements and the agronomic applicational requirements.

By using these small doses of microgranular fertilizers, there is the possibility of avoiding the drawbacks which are typical of the use of large doses during sowing and transplanting, for example compacting of the ground owing to the excessive weight of the hoppers of the distribution machines and the possible irregular application of granules in the ground, with local accumulations which have a poisonous effect on the plants and with zones which are not manured and therefore less productive.

Small doses of microgranular fertilizers are moreover less costly and therefore considerable advantages exist from a cost point of view.

The preparation of the microgranular fertilizers according to the present invention may be obtained for example using first of all mixers of various types in which the components, both in solid powder form and liquid form, are mixed, the latter sprayed, if necessary, in rotating drums to favour a more uniform distribution, followed by microgranulation, with possible final drying, and with sifting and recycling of the microgranules which have a diameter greater or smaller than that required.

The granulation stage is performed preferably with the aid of additives which facilitate both the actual granulation process and the subsequent dispersion of the microgranule following its agricultural application.

The examples given below are purely indicative, without limiting in any way the applicational possibilities of the invention.

### Preparation Example No. 1

54.5 kg of ammonium hydrogen phosphate in powder form, 26 kg of degreased blood dried using the method described above, in powder form, and 17.5 kg of zinc oxide in powder form are mixed together in a powder mixer. After mixing, the mixture is introduced into a rotating granulator into which a certain quantity of water is sprayed so as to obtain, after drying and sifting, a microgranular fertilizer which has granules with dimensions of between 0.5 and 1 mm. Any smaller or larger size granules are recycled to a subsequent charge with the same composition.

### Preparation Example No. 2

The same procedure as in Example 1 is followed, mixing together 23 kg of dried blood in powder form, degreased and dried using the method indicated above, 10 kg of ammonium hydrogen phosphate in powder form, 24 kg of potassium sulphate, 7 kg of magnesium sulphate, 15 kg of ferrous sulphate in powder form, 1 kg of soluble humates obtained from leonardite, 20 kg of calcium sulphate hydrate. After moistening, drying and sifting, a microgranular fertilizer with granules having dimensions of between 0.5 and 1 mm is obtained.

### Preparation Example No. 3 (not according to the invention)

The same procedure as in Example 1 is followed, except that the 26 kg of blood in powder form is replaced by 15 kg of methyleneurea containing 30% slow-releasing nitrogen, 5 kg of ferrous sulphate and 6 kg of potassium sulphate. After moistening, drying and sifting, a microgranular fertilizer with granules having dimensions of between 0.5 and 1 mm is obtained.

### Application Example No. 1

Application is performed over 12 fields assigned for the sowing of sugar beet and comprising different types of terrain, where the following are compared: a reference field manured using the conventional technique, with the distribution, during pre-sowing, over the whole field, of 150 kg/ha of P₂O₅ in the form of inorganic superphosphate and various plots manured, during pre-sowing, over the whole area, with 100 kg/ha of P₂O₅ in the form of inorganic superphosphate, dividing up these plots into 3 sub-plots manured, during sowing, respectively with 10, 30 and 60 kg/ha of microgranular fertilizer obtained following the steps indicated in Preparation example 1. This microgranular fertilizer is distributed during sowing using special sowing machines provided with a granule-spreading hopper so as to apply it locally in the vicinity of the seed, along the sowing row.

When the beet was harvested, the following mean results obtained in the 12 test fields were obtained:

| TONS/HA (OF SACCHAROSE ROOT) | INORGANIC SUPERPHOSPHATE DISTRIBUTED DURING PRE-SOWING OVER WHOLE FIELD (150 KG/HA OF P₂O₅) | INORGANIC SUPERPHOSPHATE DISTRIBUTED DURING PRE-SOWING OVER WHOLE FIELD (100 KG/HA OF P₂O₅) + SUBSEQUENT DISTRIBUTION OF MICROGRANULAR FERTILIZER ACCORDING TO EXAMPLE 1 LOCALLY APPLIED WITH SEED IN VARIOUS DOSES (KG/HA) | | |
|---|---|---|---|---|
| | | 10 | 30 | 60 |
| MEAN YIELD OF ROOTS | 54.4 | 55.00 | 57.54 | 58.60 |
| MEAN YIELD OF SACCHAROSE | 8.17 | 8.20 | 8.63 | 8.98 |

It may be noted how use of the microgranular fertilizer according to the invention, applied locally during sowing, is able to achieve a level of production which is far greater than that which can be obtained using a conventional granular fertilizer, applied during pre-sowing even with much higher doses of P₂O₅.

### Application Example No. 2

Application is performed in fields assigned for the sowing of maize, using equipment for distributing microgranules mounted on sowing machines, so as to apply locally together also the microgranular fertilizers produced in accordance with the procedure indicated in the Preparation Examples Nos. 1, 2 and 3.

These microgranular fertilizers are used both in doses of 30 kg/ha and are compared with untreated reference plots in three different fields.

Upon harvesting, the following results were observed:

| | WEIGHT OF SEED IN GRAMMES FOR EVERY 20 MAIZE PLANTS | CORRESPONDING HARVEST (REFERENCE = 100) |
|---|---|---|
| MICROGRANULAR FERTILIZER ACCORDING TO EXAMPLE 1 IN DOSES OF 30 KG/HA | 815 | 154.6 |
| UNTREATED REFERENCE PLOT | 528 | 100.0 |
| MICROGRANULAR FERTILIZER ACCORDING TO EXAMPLE 2 IN DOSES OF 30 KG/HA | 893 | 136.5 |
| UNTREATED REFERENCE PLOT | 654 | 100.0 |
| MICROGRANULAR FERTILIZER ACCORDING TO EXAMPLE 3 IN DOSES OF 30 KG/HA | 880 | 148.9 |
| UNTREATED REFERENCE PLOT | 591 | 100.0 |

It may be observed how the use of the microgranular fertilizers according to the invention is able to increase substantially the productivity of the crops, also when using small doses of fertilizers.

## Claims

1. A fertilizer composition, in the form of granules for localized application during sowing or transplanting of agricultural crops, comprising an organic nitrogenous compound of natural origin and an inorganic phosphate or phospho-nitrogen compound, **characterized in that** said granules have a size of between 0.1 and 1.5 mm and the granules average diameter is between 0.5 and 1.0 mm, the total nitrogen being within the range of 1% to 35% by weight of the total composition and the phosphoric anhydride being within the range of 5% to 50% by weight of the total composition.

2. A fertilizer composition according to claim 1, further comprising a slow-release organic nitrogenous compound produced by synthesis.

3. A fertilizer composition according to claim 1 or 2, wherein said organic nitrogenous substance is selected from degreased and dried animal blood.

4. A fertilizer composition according to claim 2 or 3, wherein said slow-release organic nitrogenous substance is a product of condensation of urea with an aldehyde or mixtures thereof.

5. A fertilizer composition according to claim 4, wherein said aldehyde is formaldehyde.

6. A fertilizer composition according to claim 3, wherein said degreased animal blood contains at least 13% nitrogen and no more than 7% water and has a water solubility of at least 85%.

7. A fertilizer composition according to any claim 1 to 6, wherein said organic nitrogenous substance of natural origin **is** selected from meat meal, chrysalis meal, crustacean chitin, horn and hoof meal, wildfowl feathers and mixtures thereof.

8. A fertilizer composition according to any claim 1 to 7, wherein said phosphate or phospho-nitrogen compounds are inorganic compounds selected from ammonium phosphates, potassium phosphates, ammonium polyphosphates, urea/phosphoric acid adducts, superphosphates, natural phosphorites, calcium and aluminium phosphates, thermal phosphates, dephosphorylation waste and mixtures thereof.

9. A fertilizer composition according to any claim 1 to **7**, further comprising phospho-nitrogenous compounds of organic origin selected from fish meal, bone meal, dried chicken droppings and mixtures thereof.

10. A fertilizer composition according to any previous claim, further comprising oxides, salts, chelates and various organic complexes of microelements selected from zinc, manganese, iron, copper, cobalt and molybdenum.

11. A fertilizer composition according to any claim 1 to 10, further comprising one or more plant protection agents selected from: insecticides, systemic and contact nematocides, systemic and contact fungicides or selective herbicides.

12. A fertilizer composition according to any claim 1 to 11, further comprising one or more substance having a biological action selected from microorganisms, urease inhibitors or nitrification retardants.

13. A fertilizer composition according to claim 12, wherein said microorganisms are selected from rhizobia, azospirilla, thiobacteria and mixtures thereof.

14. A fertilizer composition according to claim 13, further comprising inert substances or adjuvants such as silicas, silicates, sulphates and carbonates, leonardite, soluble humates, humic acid extracts, cellulose derivatives, lignin, carbohydrates and polymers of vegetable or synthetic origin.

15. Use of a composition according to any previous claim during sowing or transplanting of plant and tree crops for localized application along sowing or transplanting rows.

## Patentansprüche

1. Eine Düngemittelzusammensetzung in Form eines Granulats zur örtlichen Anwendung während des Säens oder des Verpflanzens von landwirtschaftlichen Nutzpflanzen, enthaltend eine organische stickstoffhaltige Verbindung natürliches Ursprungs und eine anorganische Phosphat- oder Phosphor-Stickstoff-Verbindung, **dadurch gekennzeichnet, dass** die Granulate eine Größe zwischen 0,1 und 1,5 mm aufweisen und der durchschnittliche Durchmesser der Granulate zwischen 0,5 und 1,0 mm liegt, wobei der Gesamtstickstoffgehalt innerhalb eines Bereiches von 1 bis 35 Gew.-% der Gesamtzusammensetzung liegt und Phosphorsäureanhydrid innerhalb eines Bereichs von 5 bis 50 Gew.-% der Gesamtzusammensetzung aufweist.

2. Eine Düngemittelzusammensetzung gemäß Anspruch 1, die weiterhin eine organische stickstoffhaltige Verbindung mit verzögerter Freisetzung aufweist, die durch Synthese hergestellt wurde.

3. Eine Düngemittelzusammensetzung gemäß Anspruch 1 oder 2, wobei die organische stickstoffhaltige Substanz aus entfettetem und getrocknetem Tierblut ausgewählt ist.

4. Eine Düngemittelzusammensetzung gemäß Anspruch 2 oder 3, wobei die organische stickstoffhaltige Verbindung mit verzögerter Freisetzung ein Kondensationsprodukt von Harnstoff mit einem Aldehyd oder Mischungen davon ist.

5. Eine Düngemittelzusammensetzung gemäß Anspruch 4, wobei das Aldehyd Formaldehyd ist.

6. Eine Düngemittelzusammensetzung gemäß Anspruch 3, wobei das entfettete Tierblut mindestens 13 % Stickstoff und nicht mehr als 7 % Wasser enthält und eine Wasserlöslichkeit von mindestens 85 % aufweist.

7. Eine Düngemittelzusammensetzung gemäß irgendeinem der Ansprüche 1 bis 6, wobei die organische stickstoffhaltige Substanz natürlichen Ursprungs ausgewählt ist aus Fleischmehl, Chrysalismehl, Crustaceen-Chitin, Horn- und Hufmehl, Wildvogelfedern und Mischungen davon.

8. Eine Düngemittelzusammensetzung gemäß irgendeinem der Ansprüche 1 bis 7, wobei die Phosphat- oder Phosphor-Stickstoffverbindungen anorganische Verbindungen sind, ausgewählt aus Ammoniumphosphaten, Kaliumphosphaten, Ammoniumpolyphosphaten, Harnstoff/Phosphorsäure-Addukten, Superphosphaten, natürlichen Phosphoriten, Calcium- und Aluminiumphosphaten, thermalen Phosphaten, Entphosphatierungsabfällen und Mischungen davon.

9. Eine Düngemittelzusammensetzung gemäß irgendeinem der Ansprüche 1 bis 7, weiterhin umfassend Phosphor-Stickstoff-Verbindungen organischen Ursprungs ausgewählt aus Fischmehl, Knochenmehl, getrocknetem Hühnerkot und Mischungen davon.

10. Eine Düngemittelzusammensetzung gemäß irgendeinem der vorherigen Ansprüche, weiterhin umfassend Oxide, Salze, Chelate und verschiedene organische Komplexe der Microelemente ausgewählt aus Zink, Mangan, Eisen, Kupfer, Kobalt und Molybdän.

11. Eine Düngemittelzusammensetzung gemäß irgendeinem der Ansprüche 1 bis 10, weiterhin umfassend ein oder mehrere Pflanzenschutzmittel ausgewählt aus Insektiziden, systemischen und Kontaktnemataziden, systemischen und Kontaktfungiziden oder selektiven Herbiziden.

12. Eine Düngemittelzusammensetzung gemäß irgendeinem der Ansprüche 1 bis 11, weiterhin umfassend eine oder mehrere Substanzen mit einer biologischen Wirkung ausgewählt aus Mikroorganismen, Ureaseinhibitoren oder Nitrifikationshemmstoffen.

13. Eine Düngemittelzusammensetzung gemäß Anspruch 12, wobei die Mikroorganismen ausgewählt sind aus Rhizobien, Azospirillen, Schwefelbakterien und Mischungen davon.

14. Eine Düngemittelzusammensetzung gemäß Anspruch 13, weiterhin umfassend inerte Substanzen oder Adjuvantien, solche wie Silika, Silikate, Sulphate und Carbonate, Leonardite, lösliche Humate, Huminsäureextrakte, Cellulosederivate, Lignin, Kohlehydrate und Polymere pflanzlichen oder synthetischen Ursprungs.

15. Verwendung einer Zusammensetzung gemäß irgendeinem vorherigen Anspruch während des Säens oder des Verpflanzens von Pflanzen oder Baumsetzlingen zur örtlichen Anwendung entlang den Aussaatreihen oder Verpflanzungsreihen.

## Revendications

1. Composition de fertilisant, sous la forme de granules pour une application localisée durant le semis ou la transplantation de cultures agricoles, comprenant un composé azoté organique d'origine naturelle et un composé inorganique phosphaté ou phospho-azoté, **caractérisée en ce que** lesdits granules ont une taille comprise entre 0,1 et 1,5 mm et le diamètre moyen des granules est compris entre 0,5 et 1,0 mm, l'azote total étant situé dans la plage allant de 1 % à 35 % en poids de la composition totale et l'anhydride phosphorique étant situé dans la plage allant de 5 % à 50 % en poids de la composition totale.

2. Composition de fertilisant selon la revendication 1, comprenant en outre un composé azoté organique à libération lente produit par synthèse.

3. Composition de fertilisant selon la revendication 1 ou 2, dans laquelle ladite substance azotée organique est choisie parmi le sang animal dégraissé et le sang animal séché.

4. Composition de fertilisant selon la revendication 2 ou 3, dans laquelle ladite substance azotée organique à libération lente est un produit de condensation d'urée avec un aldéhyde ou un mélange de tels produits.

5. Composition de fertilisant selon la revendication 4, dans laquelle ledit aldéhyde est le formaldéhyde.

6. Composition de fertilisant selon la revendication 3, dans laquelle ledit sang animal dégraissé contient au moins 13 % d'azote et au plus 7 % d'eau et a une solubilité dans l'eau d'au moins 85 %.

7. Composition de fertilisant selon l'une quelconque des revendications 1 à 6, dans laquelle ladite substance azotée organique d'origine naturelle est choisie parmi la farine de viande, la farine de chrysalides, la chitine de crustacés, la farine de cornes et sabots, les plumes de gibier et leurs mélanges.

8. Composition de fertilisant selon l'une quelconque des revendications 1 à 7, dans laquelle lesdits composés phosphatés ou phospho-azotés sont des composés inorganiques choisis parmi les phosphates d'ammonium, les phosphates de potassium, les polyphosphates d'ammonium, les adduits d'urée et d'acide phosphorique, les superphosphates, les phosphorites naturelles, les phosphates de calcium et d'aluminium, les phosphates thermiques, les déchets de déphosphorylation et leurs mélanges.

9. Composition de fertilisant selon l'une quelconque des revendications 1 à 7, comprenant en outre des composés phospho-azotés d'origine organique choisis parmi la farine de poisson, la farine d'os, les fientes de poulet séchées et leurs mélanges.

10. Composition de fertilisant selon l'une quelconque des revendications précédentes, comprenant en outre des oxydes, des sels, des chélates et divers complexes organiques d'oligo-éléments choisis parmi le zinc, le manganèse, le fer, le cuivre, le cobalt et le molybdène.

11. Composition de fertilisant selon l'une quelconque des revendications 1 à 10, comprenant en outre un ou plusieurs agents phytoprotecteurs choisis parmi les insecticides, les nématicides systémiques et de contact, les fongicides systémiques et de contact, ou des herbicides sélectifs.

12. Composition de fertilisant selon l'une quelconque des revendications 1 à 11, comprenant en outre une ou plusieurs substances ayant une action biologique choisies parmi les micro-organismes, les inhibiteurs d'uréase et les retardateurs de nitrification.

13. Composition de fertilisant selon la revendication 12, dans laquelle lesdits micro-organismes sont choisis parmi le rhizobium, l'azospirillum, le thiobacterium et leurs mélanges.

14. Composition de fertilisant selon la revendication 13, comprenant en outre des substances ou adjuvants inertes tels que les silices, les silicates, les sulfates et les carbonates, la léonardite, les humates solubles, les extraits d'acide humique, les dérivés de cellulose, la lignine, les hydrates de carbone et les polymères d'origine végétale ou synthétique.

15. Utilisation d'une composition selon l'une quelconque des revendications précédentes durant le semis ou la transplantation de cultures de plantes et d'arbres pour une application localisée le long de rangées de semis ou de transplantation.
